# FASCICULE DE BREVET EUROPEEN

(11) **EP 2 747 398 B1**
(45) Date de publication et mention de la délivrance du brevet: **24.05.2017**
(21) Numéro de dépôt: 13198500.4
(22) Date de dépôt: 19.12.2013
(51) Int. Cl.: H04M 3/42, H04B 7/26, H04B 1/40

(54) **Procédé de réception de données par un terminal mobile d'un réseau PMR**
Datenempfangsverfahren über ein mobiles Endgerät in einem PMR-Netz
Method for data reception by a mobile terminal of a PMR network

(30) Priorité: 20.12.2012 FR 1203526
(43) Date de publication de la demande: 25.06.2014
(73) Titulaire: Thales, 92200 Neuilly Sur Seine (FR)
(72) Inventeur: Rousseau, Stéphane, 78141 Velizy Cedex (FR); Klech, Guillaume, 78141 Velizy Cedex (FR); Benbadis, Farid, 92622 Gennevilliers Cedex (FR)
(74) Mandataire: Lavoix

(56) Documents cités:
- EP-A2- 1 263 244
- US-A1- 2005 186 955

## Description

La présente invention concerne un procédé de réception de données par un terminal mobile d'un réseau PMR. L'invention se rapporte également à un procédé de communication de données dans un réseau PMR. L'invention concerne également des programmes d'ordinateur adaptés pour la mise en oeuvre du procédé de réception ou de communication. L'invention se rapporte à un terminal mobile et à un réseau PMR adaptés pour la mise en oeuvre des procédés de réception et de communication.

Le réseau de radiocommunication professionnelle appelé réseau PMR (acronyme anglais de « Professional Mobile Radiocommunications ») est un réseau de communication mobile par ondes radio utilisé sur une courte ou moyenne distance.

Il est notamment utilisé dans des milieux professionnels par des services de sécurité (armées, polices, SAMU, pompiers), les entreprises de bâtiments et travaux publics et l'industrie.

Le réseau PMR se distingue des réseaux opérateurs publiques (comme SFR ou FREE) par la nécessité d'être rapidement déployable, plus résistant à l'environnement (cas d'utilisation dans des conditions extrêmes) et plus résistant aux pannes (possibilité de travailler sur des sites isolés de toute infrastructure). En effet, le réseau PMR est la base de la communication entre les différents intervenants dans une situation de crise.

Par ces réseaux, circulent de nombreuses informations utiles pour l'intervention des professionnels.

En particulier, il est connu des documents US-A-2005/0186955 et US-A-7 366 292 d'envoyer un message de statut depuis un terminal mobile vers un autre terminal mobile. Un message de statut est un message pour lequel un texte pré-écrit est associé à un code. Le code est un nombre codé sur 16 bits. Le texte pré-écrit est, par exemple, un texte comme « non-disponible » ou encore « en action ». Lorsque le message de statut à envoyer a été sélectionné, seul le code associé est émis pour réduire au maximum la bande passante du réseau alloué sur le réseau pour la transmission de ce message. A la réception du code, l'écran du terminal mobile du destinataire affiche le texte pré-enregistré correspondant.

Mais, le texte pré-enregistré n'est pas accessible au destinataire dès lors que l'écran du terminal est inutilisable. L'écran du terminal est notamment inutilisable lorsque l'écran est cassé ou lorsque l'environnement est trop lumineux.

Il est connu du document US 2005/0186955 A un système de communication sans fil incluant une infrastructure système, une pluralité de stations mobiles et un terminale de contrôle. Le terminal de contrôle est configuré pour envoyer aux stations mobiles, par l'intermédiaire de l'infrastructure système, des signaux d'instructions.

Il existe donc un besoin pour un procédé de réception de données par un terminal mobile d'un réseau PMR permettant l'accès aux données même lorsque l'écran du terminal n'est pas utilisable.

A cet effet, il est proposé un procédé de réception de données par un terminal mobile d'un réseau PMR, le terminal mobile comprenant une mémoire dans laquelle sont mémorisées une pluralité de codes, une pluralité de données textuelles de statut et une pluralité de données sonores. Chaque code est associé à une donnée textuelle de statut et à une donnée sonore. Le procédé comprend les étapes de réception par le terminal mobile d'un code de la pluralité de codes, et de lecture de la donnée sonore associée au code reçu.

Suivant des modes de réalisation particuliers, le procédé de réception comprend une ou plusieurs des caractéristiques suivantes, prise(s) isolément ou suivant toutes les combinaisons techniquement possibles :
- chaque donnée sonore est la lecture vocale de la donnée textuelle de statut associée.
- le terminal mobile comprend un écran.
- le procédé comprend, en outre, une étape d'affichage de la donnée textuelle de statut associée au code reçu sur l'écran.
- le terminal mobile comprend un bouton d'activation.
- le procédé comprend une étape d'appui sur le bouton d'activation, l'appui sur le bouton d'activation entraînant la mise en oeuvre de l'étape de lecture.
- l'étape de lecture de la donnée sonore est mise en oeuvre simultanément à la mise en oeuvre de l'étape d'affichage.

Il est aussi proposé un procédé de communication de données dans un réseau PMR, le réseau PMR comprenant au moins deux terminaux mobiles ou au moins un terminal mobile et au moins un terminal fixe. Chaque terminal mobile ou fixe comprenant une mémoire dans laquelle sont mémorisées une pluralité de codes, une pluralité de données textuelles de statut, une pluralité de données sonores, chaque code étant associé à une donnée textuelle de statut et à une donnée sonore. Le procédé comprend les étapes de sélection d'une donnée textuelle de statut de la pluralité de données textuelles de statut d'envoi du code associé à la donnée textuelle de statut sélectionnée par un premier terminal mobile vers le ou les autres terminaux mobiles ou fixes, de réception par le ou les autres terminaux mobiles ou fixes du code envoyé, et de lecture par le ou les autres terminaux mobiles ou fixes de la donnée sonore associée au code envoyé.

L'invention se rapporte également à un programme d'ordinateur comportant des instructions de code de programmation aptes à être mises en oeuvre par un processeur, le programme d'ordinateur étant apte à mettre en oeuvre le procédé de réception tel que précédemment décrit.

L'invention se rapporte également à un programme d'ordinateur comportant des instructions de code de programmation aptes à être mises en oeuvre par un processeur, le programme d'ordinateur étant apte à mettre en oeuvre le procédé de communication tel que précédemment décrit.

Il est également proposé un terminal mobile d'un réseau PMR, le terminal mobile comprenant une mémoire dans laquelle sont mémorisées une pluralité de codes, une pluralité de données textuelles de statut, une pluralité de données sonores, chaque code étant associé à une donnée textuelle de statut et à une donnée sonore. Le terminal mobile est adapté pour la mise en oeuvre du procédé de réception tel que précédemment décrit.

Il est également proposé un réseau PMR comprenant un ensemble de terminaux tels que précédemment décrits.

L'invention se rapporte à un procédé de réception selon la revendication 1.

Suivant des modes de réalisation particuliers, le procédé de réception comprend une ou plusieurs des caractéristiques des revendications 2 à 5.

L'invention se rapporte aussi à un procédé de communication selon la revendication 6.

L'invention se rapporte également à un programme d'ordinateur selon la revendication 7.

Suivant des modes de réalisation particuliers, le programme d'ordinateur comprend la caractéristique de la revendication 8.

L'invention se rapporte, en outre, à un terminal mobile selon la revendication 9.

L'invention se rapporte aussi à un réseau PMR selon la revendication 10.

D'autres caractéristiques et avantages de l'invention apparaîtront à la lecture de la description détaillée qui suit de modes de réalisation de l'invention, donnés à titre d'exemple uniquement et en référence aux dessins qui sont :
- figure 1, un schéma d'un réseau PMR, et
- figure 2, un ordinogramme d'un exemple de procédé de communication selon l'invention.

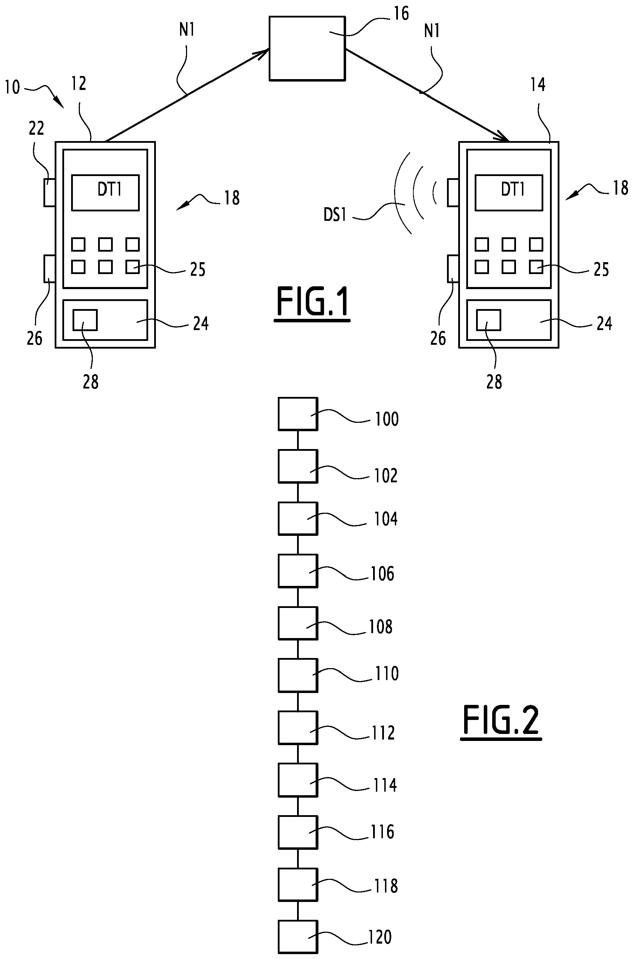

Le réseau PMR 10 représenté à la figure 1 comprend deux terminaux mobiles 12,14 et une station de base 16.

En variante, le réseau PMR 10 comporte uniquement des terminaux mobiles 12, 14 propres à communiquer entre eux directement sans l'intermédiaire d'une station de base 16.

Le premier terminal mobile 12 est, par exemple, un smartphone.

Un smartphone, ordiphone ou téléphone intelligent, est un téléphone mobile disposant aussi des fonctions d'un assistant numérique personnel. La saisie des données se fait par le biais d'un écran tactile ou d'un clavier. Il fournit des fonctionnalités basiques comme : l'agenda, le calendrier, la navigation sur le web, la consultation de courrier électronique, de messagerie instantanée ou le GPS.

Le premier terminal mobile 12 comprend une pluralité de boutons 18, un écran 20, un haut-parleur 22 et une unité centrale 24.

La pluralité de boutons 18 comprend des boutons 25 accessibles via l'écran 20 et un bouton 26 d'activation accessible indépendamment de l'écran 20.

Les boutons 25 accessibles via l'écran 20 sont des champs dédiés sur l'écran 20. L'appui sur l'écran 20 dans le champ dédié permet d'activer une fonctionnalité associée au bouton 25.

Dans le cas de la figure 1, le bouton 26 d'activation est un bouton poussoir.

L'unité centrale 24 comprend une mémoire 28.

La mémoire 28 est propre à mémoriser une pluralité de codes N, une pluralité de données textuelles de statut DT et une pluralité de données sonores DS.

Chaque code N est associé à une donnée textuelle de statut DT et à une donnée sonore DS.

L'ensemble formé par le code N, la donnée textuelle de statut DT associée et la donnée sonore DS associée est un message de statut selon la norme ETSI TR 102 022-1 V1.1.1 (2012-08).

A titre d'exemple, les codes N sont des nombres.

Une donnée textuelle de statut DT est, par exemple, « occupé », « en attente » ou « disponible ».

Selon l'exemple de la figure 1, une donnée sonore DS correspond à une émission vocale lisant exactement le contenu de la donnée textuelle de statut DT associée.

Les données sonores DS sont des fichiers audio.

Le deuxième terminal mobile 14 est, selon l'exemple de la figure 1, identique au premier terminal mobile 12.

Selon une variante, le premier terminal mobile 12 est différent du deuxième terminal mobile 14.

Le fonctionnement du réseau PMR 10 est maintenant décrit en référence à la figure 2 qui montre un ordinogramme d'un procédé de communication selon l'invention.

L'utilisateur du premier terminal mobile 12 choisit un destinataire, en l'occurrence l'utilisateur du deuxième terminal mobile 14 (étape 100).

L'utilisateur du premier terminal mobile 12 sélectionne alors une donnée textuelle de statut DT1 (étape 102).

Supposons que la donnée textuelle de statut DT1 est « occupé ».

La donnée textuelle de statut DT1 est associée au code N1 et à la donnée sonore DS1.

Dans ce cas, la donnée sonore DS1 est une émission vocale du texte « occupé ».

L'utilisateur du premier terminal mobile 12 déclenche l'envoi de la donnée textuelle de statut DT1 vers le deuxième terminal mobile 14 (étape 104).

L'unité centrale 24 du premier terminal mobile 12 convertit la demande d'envoi de la donnée textuelle de statut DT1 de l'utilisateur du premier terminal mobile 12 en une demande d'envoi du code N1 au deuxième terminal mobile 14.

Le procédé comprend une étape d'envoi du code N1 par le premier terminal mobile 12 (étape 106).

Le code N1 est transmis à la station de base 16.

La station de base 16 reçoit alors le code N1 et l'émet vers le deuxième terminal mobile 14 (étape 108).

Le code N1 est alors transmis depuis la station de base 16 vers le deuxième terminal mobile 14 (étape 110).

Le procédé comporte alors une étape de réception par le deuxième terminal mobile 14 du code N1 envoyé par le premier terminal mobile 12 (étape 112).

Le procédé comporte alors l'accès à la donnée textuelle de statut DT1 associée au code N1 reçu.

L'écran 20 du deuxième terminal mobile 14 affiche alors la donnée textuelle de statut DT1, soit le texte « occupé » (étape 114).

L'utilisateur du deuxième terminal mobile 14 appuie alors sur le bouton 26 d'activation (étape 116).

Le procédé comporte alors la lecture de la donnée sonore DS1 associée au code N1 reçu (étape 118).

En variante, la lecture de la donnée sonore DS1 est mise en oeuvre simultanément à l'étape 114 d'affichage.

Le haut-parleur 22 du deuxième terminal mobile 14 émet alors la donnée sonore DS1, c'est-à-dire les sons correspondant au texte « occupé » (étape 120).

Le procédé permet donc à l'utilisateur du deuxième terminal mobile 14 d'écouter un message de statut lorsqu'il est reçu par le terminal mobile. Ainsi, le procédé octroie un accès à la donnée textuelle de statut DT1 sans que l'utilisateur n'ait à lire la donnée textuelle de statut DT1.

Cet accès est garanti même lorsque l'écran 20 du deuxième terminal mobile 14 n'est pas utilisable, par exemple, lorsque l'écran 20 est cassé ou utilisé dans un environnement trop lumineux.

Le procédé est d'implémentation plus aisée que les procédés selon l'état de la technique dans lesquels le terminal mobile est muni d'une unité de retranscription vocale adaptée à transformer n'importe quel texte en sons.

Par comparaison, pour implémenter le procédé de l'invention, il suffit d'ajouter un fichier audio à chacun des messages de statut déjà présents dans l'unité centrale 24 du terminal mobile 12, 14. De plus, l'ajout des données sonores DS dans la mémoire 28 de l'unité centrale 24 requiert un espace limité dans la mémoire 28.

Le procédé est implémenté dans le deuxième terminal mobile 14 en modifiant la programmation de l'unité centrale 24 à l'aide d'un programme d'ordinateur comportant des instructions de code de programmation aptes à être mises en oeuvre par l'unité centrale 24, le programme d'ordinateur étant apte à mettre en oeuvre le procédé de communication.

Cette modification de la programmation de l'unité centrale 24 est effectuée avant l'emploi du deuxième terminal 14, notamment dans le cadre d'une mission.

En outre, le procédé n'implique pas d'allouer une bande passante plus importante sur le réseau PMR 10.

Notamment, par rapport à une solution impliquant un serveur externe capable de lire n'importe quel texte, l'allocation de bande passante pour accéder au serveur est évitée. De plus, le procédé proposé est moins coûteux et difficile à mettre en place que la solution impliquant un accès à un serveur externe.

L'absence d'allocation supplémentaire de bande passante est également avantageusement par rapport à une solution dans laquelle au lieu du code N1, sont envoyés le code N1 et la donnée sonore DS1 associée au code N1.

Le procédé de communication ne dépend pas de la norme considérée. Ainsi, le procédé de communication s'applique aussi bien à la norme LTE (acronyme anglais de « Long Term Evolution ») qu'à la norme TETRA (acronyme anglais de « TErrestrial Trunked Radio »).

En effet, le réseau PMR est initialement basé sur la norme TETRA, les principaux services étant l'échange de messages de statut ou de texte (SDS) ou encore des communications vocales. La faible bande passante offerte suffisait à supporter ces services.

Le réseau PMR offre aux utilisateurs une bande passante plus importante qu'avant grâce à l'introduction de la norme LTE ce qui permet d'enrichir le panel de services en ajoutant les fonctions multimédia telles que la vidéo. L'utilisation du réseau PMR est modifiée puisque sont également envoyés des données numériques et des échanges de vidéo. Le procédé proposé permet de bénéficier de cette évolution.

Le procédé de communication a été décrit pour un échange de données de statut entre le premier terminal mobile 12 et le deuxième terminal mobile 14. Le procédé de communication fonctionne de manière similaire pour un échange de données de statut entre le premier terminal mobile 12 et une pluralité d'autres terminaux mobiles. Dans ce cas, chaque autre terminal mobile effectue les étapes décrites pour le deuxième terminal mobile 14.

Selon une variante, parmi les autres terminaux mobiles, un terminal d'un « dispatcher » est utilisé. Un « dispatcher » est une personne supervisant les autres utilisateurs de terminaux mobiles sans être présent sur le terrain d'intervention. Le terminal du « dispatcher » est, par exemple, un ordinateur. En ce sens, le terminal d'un « dispatcher » est un terminal fixe puisqu'il est relié au réseau PMR par une liaison filaire.

## Revendications

1. Procédé de réception de données par un terminal mobile (12, 14) d'un réseau PMR (10),
**caractérisé en ce que** le terminal mobile (12, 14) comprend une mémoire (28) dans laquelle sont mémorisées :
- une pluralité de codes (N),
- une pluralité de données textuelles de statut (DT),
- une pluralité de données sonores (DS),
chaque code étant associé à une donnée textuelle de statut (DT) et à une donnée sonore (DS),
le terminal mobile (12, 14) comprenant un haut-parleur (22),
le procédé comprenant les étapes de :
- réception par le terminal mobile (12, 14) d'un code (N1) de la pluralité de codes (N), et
- lecture de la donnée sonore (DS1) associée au code reçu (N1), le haut-parleur (22) émettant la donnée sonore.

2. Procédé selon la revendication 1, dans lequel chaque donnée sonore (DS) est la lecture vocale de la donnée textuelle de statut (DT) associée.

3. Procédé selon la revendication 1 ou 2, dans lequel le terminal mobile (12, 14) comprend un écran (20) et dans lequel le procédé comprend, en outre, une étape de :
- affichage de la donnée textuelle de statut (DT1) associée au code reçu (N1) sur l'écran (20).

4. Procédé selon l'une quelconque des revendications 1 à 3, dans lequel le terminal mobile (12, 14) comprend un bouton d'activation (26) et dans lequel le procédé comprend une étape de :
- appui sur le bouton d'activation (26),
l'appui sur le bouton d'activation (26) entraînant la mise en oeuvre de l'étape de lecture.

5. Procédé selon la revendication 3, dans lequel l'étape de lecture de la donnée sonore (DS) est mise en oeuvre simultanément à la mise en oeuvre de l'étape d'affichage.

6. Procédé de communication de données dans un réseau PMR (10),
**caractérisé en ce que** le réseau PMR (10) comprend :
- au moins deux terminaux mobiles (12, 14) ou au moins un terminal mobile (12, 14) et au moins un terminal fixe,
chaque terminal mobile (12, 14) ou fixe comprenant une mémoire (20) dans laquelle sont mémorisées :
- une pluralité de codes (N),
- une pluralité de données textuelles de statut (DT),
- une pluralité de données sonores (DS),
chaque code étant associé à une donnée textuelle de statut (DT) et à une donnée sonore (DS),
chaque terminal mobile (12, 14) comprenant un haut-parleur (22),
le procédé comprenant les étapes de :
- sélection d'une donnée textuelle de statut (DT1) de la pluralité de données textuelles de statut (DT),
- envoi du code (N1) associé à la donnée textuelle de statut (DT1) sélectionnée par un premier terminal mobile (12) vers le ou les autres terminaux mobiles ou fixes (14),
- réception par le ou les autres terminaux mobiles ou fixes (14) du code (N1) envoyé, et
- lecture par le ou les autres terminaux mobiles ou fixes (14) de la donnée sonore (DS1) associée au code (N1) envoyé, le haut-parleur (22) du ou de chaque autre terminal mobile ou fixe (14) émettant la donnée sonore

7. Programme d'ordinateur comportant des instructions de code de programmation aptes à être mises en oeuvre par un processeur, **caractérisé en ce qu'**il est apte à mettre en oeuvre le procédé de réception selon l'une quelconque des revendications 1 à 5.

8. Programme d'ordinateur comportant des instructions de code de programmation aptes à être mises en oeuvre par un processeur, **caractérisé en ce qu'**il est apte à mettre en oeuvre le procédé de communication selon la revendication 6.

9. Terminal mobile (12, 14) d'un réseau PMR (10), le terminal mobile (12, 14) comprenant une mémoire (28) dans laquelle sont mémorisées :
- une pluralité de codes (N),
- une pluralité de données textuelles de statut (DT),
- une pluralité de données sonores (DS),
chaque code étant associé à une donnée textuelle de statut (DT) et à une donnée sonore (DS),
le terminal mobile étant adapté pour la mise en oeuvre du procédé de réception selon l'une quelconque des revendications 1 à 5.

10. Réseau PMR (10) comprenant un ensemble de terminaux mobiles (12, 14) selon la revendication 9.

## Patentansprüche

1. Verfahren zum Datenempfang durch ein mobiles Endgerät (12, 14) eines PMR-Netzes (10),
**dadurch gekennzeichnet, dass** das mobile Endgerät (12, 14) einen Speicher (28) umfasst, in dem
- eine Mehrzahl von Codes (N),
- eine Mehrzahl von Statustextdaten (DT),
- eine Mehrzahl von Audiodaten (DS),
gespeichert sind,
wobei jeder Code einem Statustextdatenelement (DT) und einem Audiodatenelement (DS) zugeordnet ist,
das mobile Endgerät (12, 14) einen Lautsprecher (22) umfasst,
wobei das Verfahren die Schritte umfasst:
- Empfangen eines Codes (N1) der Mehrzahl von Codes (N) mit dem mobilen Endgerät (12, 14), und
- Auslesen des dem empfangenen Code (N1) zugeordneten Audiodatenelement (DS1), wobei der Lautsprecher (22) das Audiodatenelement wiedergibt.

2. Verfahren nach Anspruch 1, bei dem jedes Audiodatenelement (DS) die Sprachwiedergabe des zugeordneten Statustextdatenelements (DT) ist.

3. Verfahren nach Anspruch 1 oder 2, bei dem das mobile Endgerät (12, 14) einen Bildschirm (20) umfasst, und bei dem das Verfahren außerdem einen Schritt des:
- Anzeigens des dem empfangenen Code (N1) zugeordneten Statustextdatenelements (DT1) auf dem Bildschirm (20) umfasst.

4. Verfahren nach einem beliebigen der Ansprüche 1 bis 3, bei dem das mobile Endgerät (12, 14) einen Aktivierungsknopf (26) umfasst und bei dem das Verfahren den Schritt des:
- Drückens auf den Aktivierungsknopf (26) umfasst,
wobei das Drücken auf den Aktivierungsknopf (26) das Durchführen des Ausleseschritts nach sich zieht.

5. Verfahren nach Anspruch 3, bei dem der Schritt des Auslesens des Audiodatenelements (DS) gleichzeitig mit dem Durchführen des Anzeigeschritts durchgeführt wird.

6. Verfahren zur Kommunikation von Daten in einem PMR-Netz (10),
**dadurch gekennzeichnet, dass** das PMR-Netz (10) umfasst:
- mindestens zwei mobile Endgeräte (12, 14) oder mindestens ein mobiles Endgerät (12, 14) und mindestens ein feststehendes Endgerät,
wobei jedes mobile Endgerät oder feststehende Endgerät einen Speicher (20) umfasst, in dem:
- eine Mehrzahl von Codes (N),
- eine Mehrzahl von Statustextdaten (DT),
- eine Mehrzahl von Audiodaten (DS),
gespeichert sind,
wobei jeder Code einem Statustextdatenelement (DT) und einem Audiodatenelement (DS) zugeordnet ist,
das mobile Endgerät (12, 14) einen Lautsprecher (22) umfasst,
wobei das Verfahren die Schritte umfasst:
- Auswählen eines Statustextdatenelements (DT1) aus der Mehrzahl von Statustextdaten (DT),
- Senden des Codes (N1), der dem von einem ersten mobilen Endgerät (12) ausgewählten Statustextdatenelement zugeordnet ist, an das oder die anderen mobilen oder feststehenden Endgeräte (14),
- Empfangen des gesendeten Codes (N1) durch das oder die anderen mobilen oder feststehenden Endgeräte (14), und
- Auslesen des dem gesendeten Code (N1) zugeordneten Audiodatenelement (DS1) durch das oder die anderen mobilen oder feststehenden (14) Endgeräte, wobei der Lautsprecher (22) des oder jedes anderen mobilen oder feststehenden (14) Endgeräts das Audiodatenelement wiedergibt.

7. Rechenprogramm, das Programmcodebefehle aufweist, die von einem Prozessor ausgeführt werden können, **dadurch gekennzeichnet, dass** es geeignet ist, das Empfangsverfahren nach einem beliebigen der Ansprüche 1 bis 5 durchzuführen.

8. Rechenprogramm, das Programmcodebefehle aufweist, die von einem Prozessor ausgeführt werden können, **dadurch gekennzeichnet, dass** es geeignet ist, das Kommunikationsverfahren nach Anspruch 6 durchzuführen.

9. Mobiles Endgerät (12, 14) eines PMR-Netzes (10), wobei das mobile Endgerät (12, 14) einen Speicher (28) umfasst, in dem:
- eine Mehrzahl von Codes (N),
- eine Mehrzahl von Statustextdaten (DT),
- eine Mehrzahl von Audiodaten (DS),
gespeichert sind,
wobei jeder Code einem Statustextdatenelement (DT) und einem Audiodatenelement (DS) zugeordnet ist,
das mobile Endgerät für die Durchführung des Empfangsverfahrens nach einem beliebigen der Ansprüche 1 bis 5 angepasst ist.

10. PMR-Netz (10), eine Anordnung von mobilen Endgeräten (12, 14) nach Anspruch 9 umfassend.

## Claims

1. A method for receiving data by a mobile terminal (12, 14) of a PMR network (10),
**characterized in that** the mobile terminal (12, 14) comprises a memory (28) in which are stored :
- a plurality of codes (N),
- a plurality of text data relative to status (DT),
- a plurality of audio data (SD),
each code being associated with a text data relative to status (DT) and with an audio data (DS),
the mobile terminal (12, 14) comprising a loudspeaker (22),
the method comprising the steps of :
- receiving by the mobile terminal (12, 14) a code (N1) from the plurality of codes (N), and
- reading of the audio data (DS1) associated with the received code (N1), the loudspeaker (22) emitting the audio data.

2. A method according to claim 1, wherein each audio data (DS) is the voice output reading of the associated text data relative to status (DT).

3. A method according to claim 1 or 2, wherein the mobile terminal (12, 14) comprises a display screen (20) and wherein the method further comprises a step of :
- displaying the text data relative to status (DT1) associated with the received code (N1) on the display screen (20).

4. A method according to any one of claims 1 to 3, wherein the mobile terminal (12, 14) includes an activation button (26) and wherein the method comprises a step of :
- pressing on the activation button (26),
the action of pressing on the activation button (26) causing the execution of the step of reading.

5. A method according to claim 3, wherein the step of reading the audio data (DS) is carried out simultaneously with the carrying out of the step of displaying.

6. A method for communicating data in a PMR network (10),
**characterized in that** the PMR network (10) comprises :
- at least two mobile terminals (12, 14) or at least one mobile terminal (12, 14) and at least one fixed terminal,
each mobile or fixed terminal (12, 14) comprising a memory (20) in which are stored :
- a plurality of codes (N),
- a plurality of text data relative to status (DT),
- a plurality of audio data (DS),
each code being associated with a text data relative to status (DT) and with an audio data (DS),
each mobile terminal (12, 14) comprising a loudspeaker (22),
the method comprising the steps of :
- selecting a text data relative to status (DT1) from the plurality of text data relative to status (DT),
- sending the code (N1) associated with the selected text data relative to status (DT1) by a first mobile terminal (12) to the other mobile or fixed terminal(s) (14),
- receiving by the other mobile or fixed terminal(s) (14) the sent code (N1), and
- reading by the other mobile or fixed terminal(s) (14) of the audio data (DS1) associated with the sent code (N1), the loudspeaker (22) of the or of each other mobile or fixed terminal (14) emitting the audio data.

7. A computer program comprising programming code instructions suitable to be run by a processor, **characterized in that** it is suitable to carry out the method for receiving data according to any one of claims 1 to 5.

8. A computer program comprising programming code instructions suitable to be run by a processor, **characterized in that** it is suitable to carry out the method for receiving data according to claim 6.

9. Mobile terminal (12, 14) for a PMR network (10), the mobile terminal (12, 14) comprising a memory (28) in which are stored :
- a plurality of codes (N),
- a plurality text data relative to status (DT),
- a plurality of audio data (DS),
each code being associated with a text data relative to status (DT) and with an audio data (DS),
the mobile terminal being suitable for carrying out the method for receiving according to any one of claims 1 to 5.

10. A PMR network (10) comprising a cluster of mobile terminals (12, 14) according to claim 9.
